# EUROPEAN PATENT SPECIFICATION

(11) **EP 4 325 212 B1**
(45) Date of publication and mention of the grant of the patent: **25.11.2026**
(21) Application number: 22885639.9
(22) Date of filing: 10.10.2022
(51) Int. Cl.: G06T 7/00, G01N 21/88, G06F 18/40

(54) **ELECTRODE PLATE WRINKLING DETECTION METHOD AND SYSTEM, TERMINAL, AND STORAGE MEDIUM**
VERFAHREN UND SYSTEM ZUR ERKENNUNG VON ELEKTRODENPLATTENFALTUNG, ENDGERÄT UND SPEICHERMEDIUM
PROCÉDÉ ET SYSTÈME DE DÉTECTION DE PLISSEMENT DE PLAQUES D'ÉLECTRODES, BORNE ET SUPPORT DE STOCKAGE

(30) Priority: 26.10.2021 CN 202111249085
(43) Date of publication of application: 21.02.2024
(73) Proprietor: Jiangsu Contemporary Amperex Technology Limited, Liyang, Jiangsu 213300 (CN)
(72) Inventor: GAO, Jinhuo, Changzhou, Jiangsu 213300 (CN); YU, Shengsheng, Changzhou, Jiangsu 213300 (CN); LUO, Yu, Changzhou, Jiangsu 213300 (CN); LI, Houyong, Changzhou, Jiangsu 213300 (CN); XU, Feilong, Changzhou, Jiangsu 213300 (CN); LIU, Jiyong, Changzhou, Jiangsu 213300 (CN)
(74) Representative: Ran, Handong
(86) International application number: PCT/CN2022/124389
(87) International publication number: WO 2023/071759

(56) References cited:
- CN-A- 105 118 044
- CN-A- 109 142 368
- CN-A- 110 197 170
- CN-A- 110 680 326
- CN-A- 111 524 092
- CN-A- 111 553 433
- CN-A- 111 598 861
- CN-A- 111 612 751
- CN-A- 111 815 572
- JP-A- 2015 133 259
- PENG JIANWEN ET AL: "Automatic Internal Wrinkles Detection of Lithium-ion Batteries using Convolutional Neural Network", 2021 IEEE 17TH INTERNATIONAL CONFERENCE ON AUTOMATION SCIENCE AND ENGINEERING (CASE), IEEE, 23 August 2021 (2021-08-23), pages 1422 - 1427, XP033983436, DOI: 10.1109/CASE49439.2021.9551649
- BADMOS OLATOMIWA ET AL: "Image-based defect detection in lithium-ion battery electrode using convolutional neural networks", JOURNAL OF INTELLIGENT MANUFACTURING, SPRINGER US, NEW YORK, vol. 31, no. 4, 1 August 2019 (2019-08-01), pages 885 - 897, XP037083271, ISSN: 0956-5515, [retrieved on 20190801], DOI: 10.1007/S10845-019-01484-X
- ARNO KWADE ET AL: "International Battery Production Conference 4 to 6 November 2019 /IBPC 2019/", CONFERENCE BROCHURE, 1 January 2019 (2019-01-01), pages 6 - 65, XP093010050, Retrieved from the Internet <URL:https://battery-production-conference.de/wp-content/uploads/2019/11/IBPC_2019_Conference-Brochure_final.pdf> [retrieved on 20221221]

## Description

### TECHNICAL FIELD

This application relates to the field of battery technologies, and in particular, to an electrode plate wrinkling detection method and system, a terminal, and a storage medium.

### BACKGROUND

Existing batteries are subject to various defects during the winding production process, such as electrode plate wrinkling defects, electrode plate folding defects, and tab folding defects. Cells with wrinkled electrode plates have risks such as lithium precipitation induced short circuit and low capacity, so they receive attention during the production process. Generally, the cells produced by winding machines are gathered on a logistics line, and the appearance of the cells is observed manually and the cells are disassembled in a detection method to determine whether wrinkled electrode plates exist. After the electrode plate wrinkling defects of the cells have been detected, a scheduling personnel is assigned to adjust the machine. This detection method has the problems of lagged detection results and low accuracy of the detection results.

Therefore, there is an urgent need for a method capable of accurately detecting wrinkling of electrode plates in a timely manner.

Jianwen Peng et al. proposes an automatic internal wrinkles detection of lithiumion batteries using convolutional neural network (2021 IEEE 17th international conference on automation science and engineering (CASE), IEEE, 23 August 2021 (2021-08-23), pages 1422-1427, XP033983436). In this paper, a detection method based on X-ray technology and convolutional neural network(CNN) is proposed for internal wrinkles detection in lithiumion batteries.

Arno Kwade et al. in "International Battery Production Conference 4 to 6 November 2019 /IBPC 2019/" (conference brochure, 1 January 2019 (2019-01-01), pages 6-65, XP093010050) proposes an in-line measurement of wrinkle formation and strains for NMC 622 cathodes while calendering to derive a suitable counteraction.

### SUMMARY

An objective of this application is to propose an electrode plate wrinkling detection method and system, a terminal, and a storage medium, so as to solve the technical problems of lagged detection results obtained and low accuracy of the detection results of a detection method in the prior art.

According to a first aspect, an embodiment of this application provides an electrode plate wrinkling detection method. The method includes: acquiring images of cells with wrinkled electrode plates and images of cells with non-wrinkled electrode plates; performing type labeling processing on the images of the cells with wrinkled electrode plates and the images of the cells with non-wrinkled electrode plates, and constructing a database by using the labeled images; based on the database, training via a convolutional neural network to generate an electrode plate wrinkling detection model; testing and calibrating the electrode plate wrinkling detection model by using images outside the database; and performing electrode plate wrinkling detection on cell images obtained in a real-time manner during a battery winding process by using the tested and calibrated electrode plate wrinkling detection model.

In the technical solution of this embodiment of this application, in the electrode plate wrinkling detection method, the images of the cells with wrinkled electrode plates and the images of the cells with non-wrinkled electrode plates are first acquired, where the images of the cells with wrinkled electrode plates are images of defective cells with multiple types of wrinkled electrode plates having different wrinkling positions and different wrinkling textures, and the images of the cells with non-wrinkled electrode plates include images of intact cells and images of normal cells with wrinkling, stripe patterns, stains, and the like on separators caused by a production process. Then the acquired images are labeled with types, and the database is constructed using the labeled images. Based on the database, an artificial intelligence (AI) deep learning electrode plate wrinkling detection model is trained using the convolutional neural network. The generated electrode plate wrinkling detection model is capable of checking cell images and categorizing them into corresponding types. In addition, in this method, the images outside the database are further used to test the electrode plate wrinkling detection model, so as to improve the detection accuracy. To detect whether the cells have wrinkled electrode plates in a real-time manner and determine the defective cells, the cell images acquired during the battery winding process are taken as detection targets, which can not only discover the defective cells in a timely manner, but also remind a scheduling personnel to adjust the machine in a timely manner, reducing the electrode plate wrinkling probability in the whole winding process. In addition, this also avoids false negatives and false positives caused by observation on the appearance of the cells and the problem of loss of manpower and material resources caused by disassembly of the normal cells due to disassembly of the cells for determining whether the cells have wrinkled electrode plates.

In some embodiments, after the acquiring images of cells with wrinkled electrode plates and images of cells with non-wrinkled electrode plates, the electrode plate wrinkling detection method further includes: pre-processing the acquired images of the cells with wrinkled electrode plates and images of the cells with non-wrinkled electrode plates, where the pre-processing includes: performing cleansing on the images of the cells with wrinkled electrode plates and the images of the cells with non-wrinkled electrode plates, removing interference parts, and broadening, enhancing, and brightening the images of the cells with wrinkled electrode plates and the images of the cells with non-wrinkled electrode plates.

Pre-processing the images can avoid misjudgment caused by image factors, thus improving the accuracy of the subsequent type labeling processing and ultimately ensuring the accuracy of data in the database. Removing the interference parts of the images may refer to removing mechanical mechanisms in the images.

In some embodiments, the performing type labeling processing on the images of the cells with wrinkled electrode plates and the images of the cells with non-wrinkled electrode plates, and constructing a database by using the labeled images include: labeling the images of the cells with wrinkled electrode plates and the images of the cells with non-wrinkled electrode plates with types including wrinkling of electrode plate, wrinkling of separator, stripe pattern on separator, stain on separator, and full qualification, and constructing a database by using the images labeled with the types including wrinkling of electrode plate, wrinkling of separator, stripe pattern on separator, stain on separator, and full qualification.

Cells with wrinkled electrode plates have risks such as lithium precipitation induced short circuit and low capacity, so only the cells corresponding to the wrinkling of electrode plate type are labeled as defective cells. Wrinkling, stripe patterns, stains, and the like on separators do not affect the cell performance, and the problems such as stripe patterns and strains on the separators are unavoidable during the production process, so other cases except wrinkling of electrode plate are all labeled as normal cells.

In some embodiments, the testing and calibrating the electrode plate wrinkling detection model by using images outside the database includes: testing the electrode plate wrinkling detection model by using the images outside the database; under a condition that a test result meets a target requirement, performing electrode plate wrinkling detection on cell images obtained in a real-time manner during a battery winding process by using the tested and calibrated electrode plate wrinkling detection model; or under a condition that the test result does not meet the target requirement, retraining the electrode plate wrinkling detection model by modifying parameters of the convolutional neural network until the test result meets the target requirement, thereby improving the detection accuracy of the electrode plate wrinkling detection model.

In some embodiments, the performing electrode plate wrinkling detection on cell images obtained in a real-time manner during a battery winding process by using the tested and calibrated electrode plate wrinkling detection model includes: shooting to-be-inspected cells during a winding process to obtain images of the cells, inputting the images of the cells into the electrode plate wrinkling detection model for detection, when determining that defective cells with wrinkled electrode plates exist, discharging the defective cells into a defective product tank, or when determining that no defective cell with wrinkled electrode plates exists, discharging normal cells into a next production procedure.

This method has high accuracy and fast response speed. To expand sources of the cell images, an electrode plate wrinkling detection apparatus may be disposed at a position of a cell winding machine, specifically at a position directly facing the cell or at a position of an electrode plate tangent to the cell. The corresponding obtained cell images include images of a to-be-inspected cell and/or images of the electrode plate tangent to the to-be-inspected cell. The images of the electrode plate tangent to the to-be-inspected cell are typically images of an anode plate tangent to the to-be-inspected cell. This is because an anode plate and a cathode plate are made of different materials, and the cathode plate is hard and less prone to wrinkling.

In some embodiments, when it is determined that the defective cells with wrinkled electrode plates exist, an electrode plate wrinkling alarm prompt is further given so as to remind the scheduling personnel to adjust the machine in a timely manner, reducing the electrode plate wrinkling probability in the subsequent winding process.

According to a second aspect, an embodiment of this application provides an electrode plate wrinkling detection system. The system includes: an electrode plate wrinkling detection apparatus configured to acquire images of cells with wrinkled electrode plates and images of cells with non-wrinkled electrode plates; a processing module configured to: perform type labeling processing on the images of the cells with wrinkled electrode plates and the images of the cells with non-wrinkled electrode plates; and construct a database by using the labeled images; a training module configured to: based on the database, train via a convolutional neural network to generate an electrode plate wrinkling detection model; a testing module configured to test and calibrate the electrode plate wrinkling detection model by using images outside the database; and a detection module configured to perform electrode plate wrinkling detection on cell images obtained in a real-time manner during a battery winding process by using the tested and calibrated electrode plate wrinkling detection model.

In some embodiments, the electrode plate wrinkling detection system further includes: a pre-processing module configured to pre-process the acquired images of the cells with wrinkled electrode plates and images of the cells with non-wrinkled electrode plates, where the pre-processing includes: performing cleansing on the images of the cells with wrinkled electrode plates and the images of the cells with non-wrinkled electrode plates, removing interference parts, and broadening, enhancing, and brightening the images of the cells with wrinkled electrode plates and the images of the cells with non-wrinkled electrode plates.

In some embodiments, the processing module is further configured to: label the images of the cells with wrinkled electrode plates and the images of the cells with non-wrinkled electrode plates with types including wrinkling of electrode plate, wrinkling of separator, stripe pattern on separator, stain on separator, and full qualification; and construct a database by using the images labeled with the types including wrinkling of electrode plate, wrinkling of separator, stripe pattern on separator, stain on separator, and full qualification.

In some embodiments, the testing module is further configured to: test the electrode plate wrinkling detection model by using the images outside the database; under a condition that a test result meets a target requirement, communicatively transmit a signal indicating that the requirement is met to the detection module; or under a condition that the test result does not meet the target requirement, retrain the electrode plate wrinkling detection model by modifying parameters of the convolutional neural network until the test result meets the target requirement, and communicatively transmit the signal indicating that the requirement is met to the detection module; and the detection module is further configured to: in response to the received signal indicating that the requirement is met, perform the electrode plate wrinkling detection.

In some embodiments, the electrode plate wrinkling detection apparatus is further configured to: shoot to-be-inspected cells during a winding process to obtain images of the cells; and transmit the images of the cells to the detection module; and the detection module is further configured to: receive the images of the cells; check the images of the cells by using the electrode plate wrinkling detection model; when determining that defective cells with wrinkled electrode plates exist, output a signal indicating discharging the defective cells into a defective product tank; or when determining that no defective cell with wrinkled electrode plates exists, output a signal indicating discharging normal cells into a next production procedure.

In some embodiments, when determining that the defective cells with wrinkled electrode plates exist, the detection module further gives an electrode plate wrinkling alarm prompt.

According to a third aspect, an embodiment of this application provides a terminal. The terminal includes: at least one processor; and a memory communicatively connected to the at least one processor, where the memory stores instructions executable by the at least one processor, and the instructions are executed by the at least one processor to implement the electrode plate wrinkling detection method according to any one of the foregoing embodiments.

According to a fourth aspect, an embodiment of this application provides a storage medium storing a computer program, where the computer program is executed by a processor to implement the electrode plate wrinkling detection method according to any one of the foregoing embodiments.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, same reference signs throughout a plurality of accompanying drawings indicate the same or similar components or elements. These accompanying drawings are not necessarily drawn to scale. It should be noted that these accompanying drawings are merely intended to illustrate some embodiments disclosed in this application and should not be construed as any limitations on the scope of this application.
FIG. 1 is a flowchart of an electrode plate wrinkling detection method according to some embodiments of this application;
FIG. 2 is a flowchart of pre-processing of acquired images according to some embodiments of this application;
FIG. 3 is a schematic structural diagram of an electrode plate wrinkling detection apparatus according to some embodiments of this application;
FIG. 4 is a flowchart of an electrode plate wrinkling detection process of a cell during a winding process according to some embodiments of this application;
FIG. 5 is a schematic diagram of wrinkling of an electrode plate in a case of shooting a front cathode plate of a to-be-inspected cell according to some embodiments;
FIG. 6 is a schematic diagram of wrinkling of a separator in a case of shooting a front cathode plate of a to-be-inspected cell according to some embodiments;
FIG. 7 is a schematic diagram of a stripe pattern on a separator in a case of shooting a front cathode plate of a to-be-inspected cell according to some embodiments;
FIG. 8 is a schematic diagram of a stain on a separator in a case of shooting a front cathode plate of a to-be-inspected cell according to some embodiments;
FIG. 9 is a schematic diagram of full qualification in a case of shooting a front cathode plate of a to-be-inspected cell according to some embodiments;
FIG. 10 is a schematic diagram of wrinkling of an electrode plate in a case of shooting a front anode plate of a to-be-inspected cell according to some embodiments;
FIG. 11 is a schematic diagram of wrinkling of a separator in a case of shooting a front anode plate of a to-be-inspected cell according to some embodiments;
FIG. 12 is a schematic diagram of a stain on a separator in a case of shooting a front anode plate of a to-be-inspected cell according to some embodiments;
FIG. 13 is a schematic diagram of full qualification in a case of shooting a front anode plate of a to-be-inspected cell according to some embodiments; and
FIG. 14 is a schematic structural diagram of a terminal according to some embodiments of this application.

### DESCRIPTION OF EMBODIMENTS

The following describes in detail the embodiments of technical solutions of this application with reference to the accompanying drawings. The following embodiments and accompanying drawing are merely intended to describe the technical solutions of this application more clearly and therefore are used as just examples which do not constitute any limitations on the protection scope of this application. The drawings schematically illustrate only parts related to the technical solutions of this application and do not represent their actual structure as products.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. Unless otherwise stated, any method step disclosed herein are not necessarily performed in the definite sequence disclosed.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

A battery production process involves production of cell, and the quality of the cell directly affects the quality of the battery. A manufacturing procedure of a wound cell specifically includes: arranging cut electrode plates and separators in sequence, and then rotating a winding mandrel to wind the electrode plates and the separators to form a jelly roll wrapped layer by layer and served as a cell. Various defects occur during the winding production process, such as electrode plate wrinkling defects, electrode plate folding defects, and tab folding defects. Cells with wrinkled electrode plates have risks such as lithium precipitation induced short circuit and low capacity, so they require special attention.

The inventor has noted that in the prior art, after a batch of cells are wound, cells produced by winding machines are generally gathered on a logistics line, and wrinkling of electrode plate is detected in manners of manually observing the appearance of the cells and disassembling the cells. The manner of manually observing the appearance of the cells is not only low in accuracy, but also prone to false positives and false negatives that lead to outflow of defective cells, while the manner of disassembling the cells is prone to loss of normal cells due to disassembly of the normal cells, and a lot of manpower and material resources are wasted in a process of distinguishing between the normal cells and the defective cells. In addition, a long time is consumed in a process from production to discovery of wrinkling of electrode plate, and during this process, winding machines producing the defective cells continuously produce cells with wrinkled electrode plates, which increases production costs.

To discover the defective cells and the corresponding winding machines producing the defective cells in a timely manner, the inventor has found through research that conditions of electrode plates can be detected during winding production of the cells so as to discover wrinkling of electrode plate at an early stage, thus discovering the defective cells and the corresponding winding machines producing the defective cells at an early stage. Based on the foregoing considerations, the inventor, through in-depth research, has designed an electrode plate wrinkling detection method and system, a terminal, and a storage medium.

An electrode plate wrinkling detection method provided in some embodiments of this application includes:
acquiring images of cells with wrinkled electrode plates and images of cells with non-wrinkled electrode plates;
performing type labeling processing on the images of the cells with wrinkled electrode plates and the images of the cells with non-wrinkled electrode plates, and constructing a database by using the labeled images;
based on the database, training via a convolutional neural network to generate an electrode plate wrinkling detection model;
testing and calibrating the electrode plate wrinkling detection model by using images outside the database; and
performing electrode plate wrinkling detection on cell images obtained in a real-time manner during a battery winding process by using the tested and calibrated electrode plate wrinkling detection model.

In the electrode plate wrinkling detection method according to some embodiments of this application, the images of the cells with wrinkled electrode plates and the images of the cells with non-wrinkled electrode plates are first acquired, where the images of the cells with wrinkled electrode plates are images of defective cells with multiple types of wrinkled electrode plates having different wrinkling positions and different wrinkling textures, and the images of the cells with non-wrinkled electrode plates include images of intact cells and images of normal cells with wrinkling, stripe patterns, stains, and the like on separators caused by a production process. Then the acquired images are labeled with types, and the database is constructed using the labeled images. Based on the database, an artificial intelligence (AI) deep learning electrode plate wrinkling detection model is trained using the convolutional neural network. The generated electrode plate wrinkling detection model is capable of checking cell images and categorizing them into corresponding types. In addition, in this method, the images outside the database are further used to test the electrode plate wrinkling detection model, so as to improve the detection accuracy. To detect whether the cells have wrinkled electrode plates in a real-time manner and determine the defective cells, the cell images acquired during the battery winding process are taken as detection targets, which can not only discover the defective cells in a timely manner, but also remind a scheduling personnel to adjust the machine in a timely manner, reducing the electrode plate wrinkling probability in the whole winding process. In addition, this also avoids false negatives and false positives caused by observation on the appearance of the cells and the problem of loss of manpower and material resources caused by disassembly of the normal cells due to disassembly of the cells for determining whether the cells have wrinkled electrode plates.

It should be understood that the electrode plate may include an anode plate and a cathode plate. In terms of a lithium-ion battery, one or more of slurries such as graphite, silicon, silicon oxide, and graphite-mixed silicon are applied on the anode plate to form an anode active substance coating layer, and a slurry containing lithium ions is applied on the cathode plate to form a cathode active substance coating layer. A separator is sandwiched between the anode plate and the cathode plate.

The separator is a film used to separate positive and negative electrodes during electrolysis reaction so as to prevent energy loss caused by direct reaction in an electrolytic cell. In a structure of a lithium battery, the separator is one of important inner components. The performance of the separator determines an interface structure and internal resistance of the battery and directly affects the capacity, cycling performance, and safety performance of the battery. A separator with excellent performance plays an important role in improving the overall performance of the battery.

A cell is a single electrochemical cell including positive and negative electrodes formed by stacking or winding electrode plates and separators in a specified order, and is typically not used directly.

The electrode plate wrinkling detection method disclosed in some embodiments of this application may be used in, but is not limited to, a cell production and manufacturing process including a winding procedure of lithium-ion batteries, sodium-ion batteries, and the like. The electrode plate wrinkling detection method provided in some embodiments of this application helps to discover the wrinkled electrode plates in a timely manner during production and manufacturing of cells, thus discovering the defective cells and the winding machines producing the defective cells in a timely manner. In this way, the defective cells are accurately picked out and the winding machines producing the defective cells are adjusted so as to avoid continuous production of the defective cells, achieving the purpose of reducing production loss while avoiding outflow of the defective cells.

The following will describe the electrode plate wrinkling detection method and system, the terminal, and the storage medium provided in this application in detail with reference to specific embodiments.

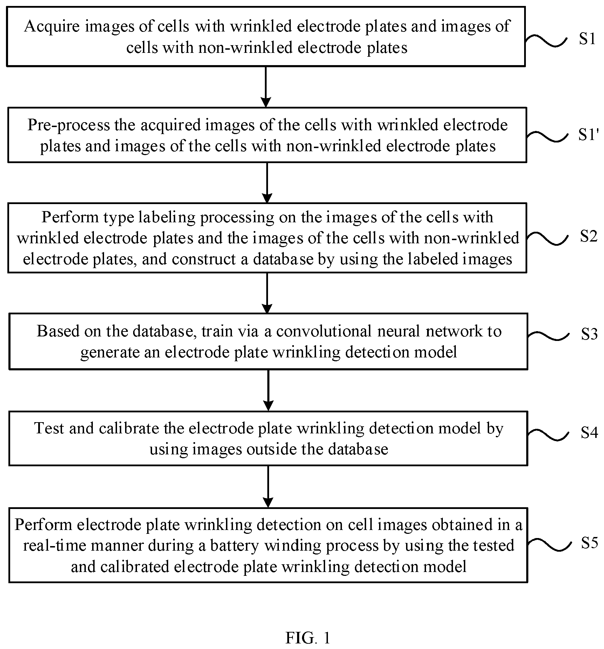

Referring to FIG. 1, a first aspect of this application provides an electrode plate wrinkling detection method. The method includes the following steps.

Step S1: Acquiring images of cells with wrinkled electrode plates and images of cells with non-wrinkled electrode plates.

In the image acquisition stage, no less than 200 images including different types of images of cells with wrinkled electrode plates and images of cells with non-wrinkled electrode plates are shot by an electrode plate wrinkling detection apparatus. In some embodiments, more than 1000 images can be shot so as to cover as much as possible various types of defects occurring during the winding process. The images of the cells with wrinkled electrode plates are images of defective cells with multiple types of wrinkled electrode plates having different wrinkling positions and different wrinkling textures, and the images of the cells with non-wrinkled electrode plates include images of intact cells and images of normal cells with wrinkling, stripe patterns, stains, and the like on separators caused by a production process.

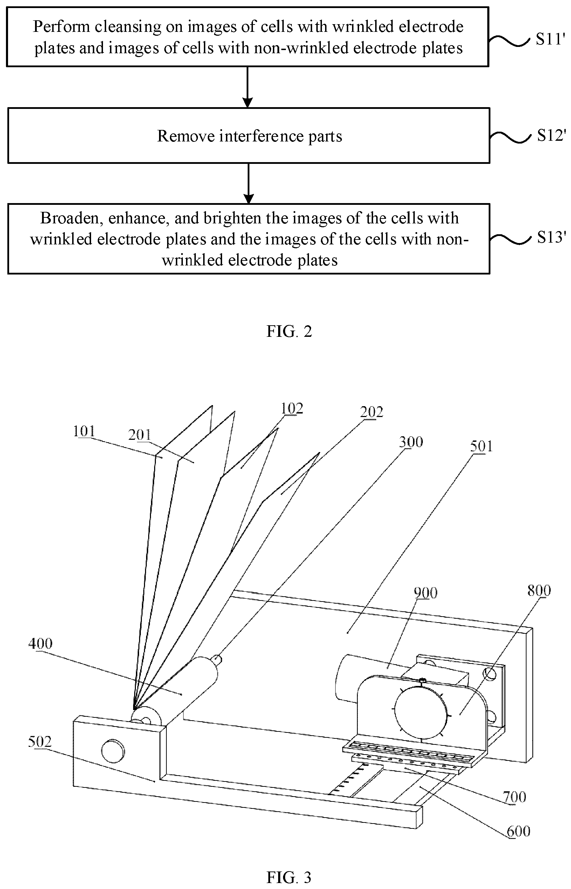

Referring to FIG. 1 and FIG. 2, in some embodiments, after step S1, the method further includes the following step. Step S1': Pre-processing the acquired images of the cells with wrinkled electrode plates and images of the cells with non-wrinkled electrode plates. Step S1' may include the following steps.

Step S11': Performing cleansing on the images of the cells with wrinkled electrode plates and the images of the cells with non-wrinkled electrode plates.

Step S12': Removing interference parts.

Step S13': Broadening, enhancing, and brightening the images of the cells with wrinkled electrode plates and the images of the cells with non-wrinkled electrode plates.

The broadening treatment refers to generating similar but different to-be-trained samples by making a series of random changes to to-be-trained images, thereby enlarging the size of a training dataset. Randomly changing training samples can reduce the dependence of the model on some attributes, thereby improving generalization capability of the model. For example, an image is cut in different ways so that objects of interest appear at different positions, thereby reducing the dependence of the model on the positions where the objects appear. A fundamental objective is to increase the amount of information so that the model obtains higher-layer semantic information and gains a deeper understanding of the problem, thereby improving the accuracy (objectively, because of the enriched amount of information, it also has an effect of preventing overfitting).

The enhancing treatment refers to enhancing useful information in an image, which is a distortion process that aims to improve a visual effect of an image for an application scenario of a given image. Purposefully emphasizing overall or local characteristics of an image makes an original unclear image become clear or emphasizes some features of interest, expands difference between features of different objects in the image, and suppresses features of disinterest, thereby improving the quality of the image, enriching the amount of information, and enhancing the image interpretation and recognition effect to meet the needs of some special analyses.

The brightening treatment refers to adjusting factors such as brightness and color to reduce sensitivity of the model to color.

Pre-processing the acquired images of the cells with wrinkled electrode plates and images of the cells with non-wrinkled electrode plates can avoid misjudgment caused by image factors, thus improving the accuracy of the subsequent type labeling processing and ultimately ensuring the accuracy of data in the database. Removing the interference parts of the image may refer to removing mechanical mechanisms in the image and may also refer to removing other unnecessary interference parts in the image other than the cell. The broadening treatment on the image refers to generating similar but different training samples by making a series of random changes, thereby enlarging the size of the training dataset. The enhancing treatment on the image can improve the quality of the image. The brightening treatment on the image makes it easier to see some detailed information of the image.

In some embodiments, the electrode plate wrinkling detection method further includes the following step. Step S2: Performing type labeling processing on the images of the cells with wrinkled electrode plates and the images of the cells with non-wrinkled electrode plates, and construct a database by using the labeled images. Step S2 may include: labeling the images of the cells with wrinkled electrode plates and the images of the cells with non-wrinkled electrode plates with types including wrinkling of electrode plate, wrinkling of separator, stripe pattern on separator, stain on separator, and full qualification; and constructing a database by using the images labeled with the types including wrinkling of electrode plate, wrinkling of separator, stripe pattern on separator, stain on separator, and full qualification. Depending on actual needs, more types of labeling may be provided. Cells with wrinkled electrode plates have risks such as lithium precipitation induced short circuit and low capacity, so in some embodiments, only the cells corresponding to the wrinkling of electrode plate type are labeled as defective cells. Wrinkling, stripe patterns, stains, and the like on separators do not affect the cell performance, and the problems such as stripe pattern and strain on the separators are unavoidable during the production process, so in some embodiments, other cases except wrinkling of electrode plate are all labeled as normal cells. It should be understood that wrinkling of electrode plate typically refers to wrinkling of an anode plate. This is because the material of the anode plate is relatively soft, and wrinkling of electrode plate occurs during winding due to the quality of the material of the electrode plate, the winding process, or the equipment problem of the winding machine.

The image recognition technology is a technology for processing and analyzing the image via a computer to recognize different modes of targets and objects. In the conventional industry, an industrial camera is typically used to shoot images of to-be-inspected targets, and a computer is used to recognize simple image features such as width, length, and shape formed by gray values. However, the recognition accuracy is low for complex and variable image features. In some embodiments of this application, the electrode plate wrinkling detection method further includes the following step. Step S3: Based on the database, training via a convolutional neural network to generate an electrode plate wrinkling detection model. Features of images of the cells with wrinkled electrode plates and the images of the cells with non-wrinkled electrode plates, such as wrinkle width and wrinkle texture of a wrinkled region, and wrinkling of separator, stripe pattern on separator, and stain on separator of a non-wrinkled region are extracted, and the convolutional neural network is used for repeated training to generate an AI deep learning electrode plate wrinkling detection model. The AI deep learning electrode plate wrinkling detection model is a categorizer model. For example, during the detection process, it can categorize images into five types: wrinkling of electrode plate, wrinkling of separator, stripe pattern on separator, stain on separator, and full qualification. The cells with wrinkled electrode plates are recognized and distinguished by the trained AI deep learning electrode plate wrinkling detection model, overcoming the problem of low image feature recognition accuracy in the prior art caused by recognition based on gray values. The electrode plate wrinkling detection model is generated based on the convolutional neural network. The convolutional neural network is capable of automatically extracting, learning, and pre-processing features such as texture, width, and length of images to generate a categorizer. After training and iteration with a large number of images with different types and features, an electrode plate wrinkling detection model with high image recognition accuracy can be obtained.

In some embodiments, to improve the detection accuracy of the electrode plate wrinkling detection model, the electrode plate wrinkling detection method further includes the following step. Step S4: Testing and calibrating the electrode plate wrinkling detection model by using images outside the database.

Step S4 may include: testing the electrode plate wrinkling detection model by using the images outside the database; determining whether a test result meets a target requirement; under a condition that the test result meets the target requirement, performing the step of performing electrode plate wrinkling detection by using the electrode plate wrinkling detection model, that is, putting the electrode plate wrinkling detection model into use; or under a condition that the test result does not meet the target requirement, retraining the AI deep learning electrode plate wrinkling detection model by modifying parameters of the neural network, such as weights and feature values until the test result meets the target requirement.

Testing the electrode plate wrinkling detection model by using the images outside the database can determine the detection accuracy of the electrode plate wrinkling detection model according to the test result. In some embodiments, the target requirement may mean that the accuracy reaches more than 90%. Detection results include types such as wrinkling of electrode plate, wrinkling of separator, stripe pattern on separator, stain on separator, and full qualification, which can further improve the detection accuracy.

In some embodiments, the electrode plate wrinkling detection method further includes the following step. Step S5: Performing electrode plate wrinkling detection on cell images obtained in a real-time manner during a battery winding process by using the tested and calibrated electrode plate wrinkling detection model. Step S5 may include the following steps. S51: Starting an electrode plate wrinkling detection apparatus. S52: Shooting to-be-inspected cells during a winding process to obtain images of the cells. S53: Pre-processing the images of the cells. S54: Inputting the pre-processed images of the cells into the electrode plate wrinkling detection model for detection, and determining whether wrinkled electrode plates exist.

When it is determined that wrinkled electrode plates exist, a determining result is output as defective cells, and the defective cells are discharged into a defective product (NG) tank and distinguished from normal cells; or when it is determined that no wrinkled electrode plate exists, the determining result is output as normal cells, and the normal cells are discharged into a next production procedure. The electrode plate wrinkling detection method provided in the embodiments of this application has high accuracy and fast response speed. In this embodiment, the electrode plate wrinkling detection apparatus may be disposed at a position of a cell winding machine, specifically at a position directly facing the cell. The obtained cell images are images of the to-be-inspected cell.

In some embodiments, when it is determined that wrinkled electrode plates exist, an electrode plate wrinkling alarm prompt is first given and the defective cells are then discharged into the NG tank so as to remind the scheduling personnel to adjust the machine in a timely manner, reducing the electrode plate wrinkling probability in the subsequent winding process.

FIG. 3 is a schematic structural diagram of an electrode plate wrinkling detection apparatus according to some embodiments of this application. Referring to FIG. 3, a lower separator 101, a cathode plate 201, an upper separator 102, and an anode plate 202 are wound on a winding mandrel 300 to form a cell 400. The winding mandrel 300 is mounted on a first side plate 501 and a second side plate 502. During a winding process, the winding mandrel 300 drives the lower separator 101, the cathode plate 201, the upper separator 102, and the anode plate 202 to rotate at a high speed to implement winding. A sliding rail 600 is fixed to the first side plate 501 and the second side plate 502, and a sliding block 700 is mounted on the sliding rail 600. A connecting plate 800 is fixedly connected to the sliding block 700 through bolts. A rotating shaft is mounted on the connecting plate 800. The rotating shaft is capable of rotating and is fixed at a position through bolts. A CCD (Charge Coupled Device, charge coupled device image sensor) detection mechanism 900 is fixedly connected to the rotating shaft and is configured to shoot to-be-inspected cells during the winding process. Based on shooting requirements, the CCD detection mechanism 900 is capable of moving transversely on the sliding rail 600 via the sliding block 700, and longitudinal movement of the CCD detection mechanism 900 may also be implemented by longitudinal movement of the connecting plate 800 on the sliding block 700. In addition, shooting angles of the CCD detection mechanism 900 can be adjusted by the rotating shaft and fixed by bolts.

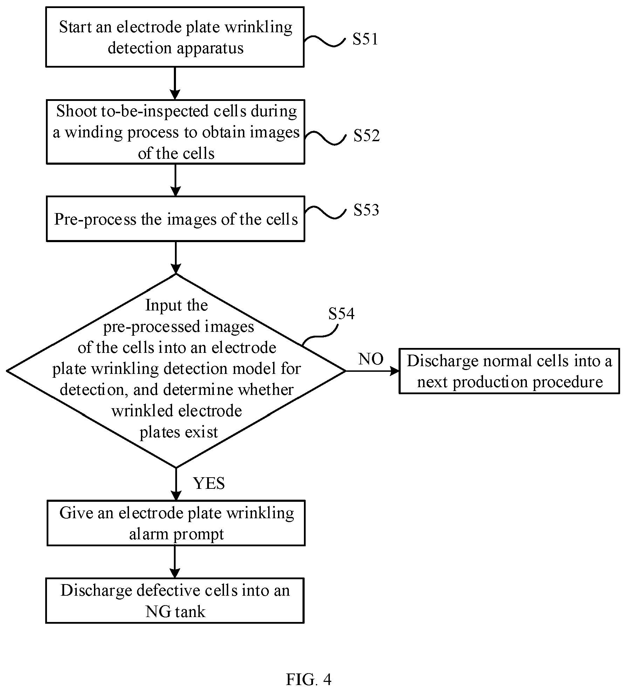

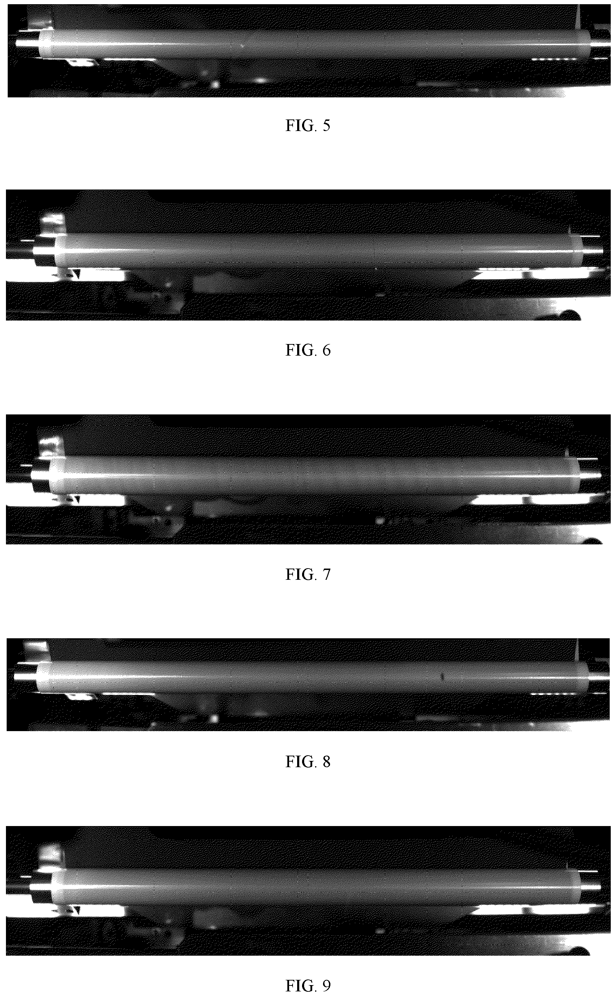

In the cell 400, the lower separator 101, the cathode plate 201, the upper separator 102, and the anode plate 202 are tightly wound together. The lower separator 101 and the upper separator 102 are made of thin and soft materials, and wrinkling of the cathode plate 201 and the anode plate 202 can be shown through the separator. Images of the cell 400 are shot using the CCD detection mechanism 900, and wrinkling of electrode plate is analyzed and determined using an AI algorithm, so that wrinkling of the cathode plate can be detected online in a real-time manner, with a detection process as shown in FIG.4. In this embodiment, a front cathode plate 201 of a to-be-inspected cell 400 is shot using the CCD detection mechanism 900 to obtain various types of cell images as shown in FIG. 5 to FIG. 9.

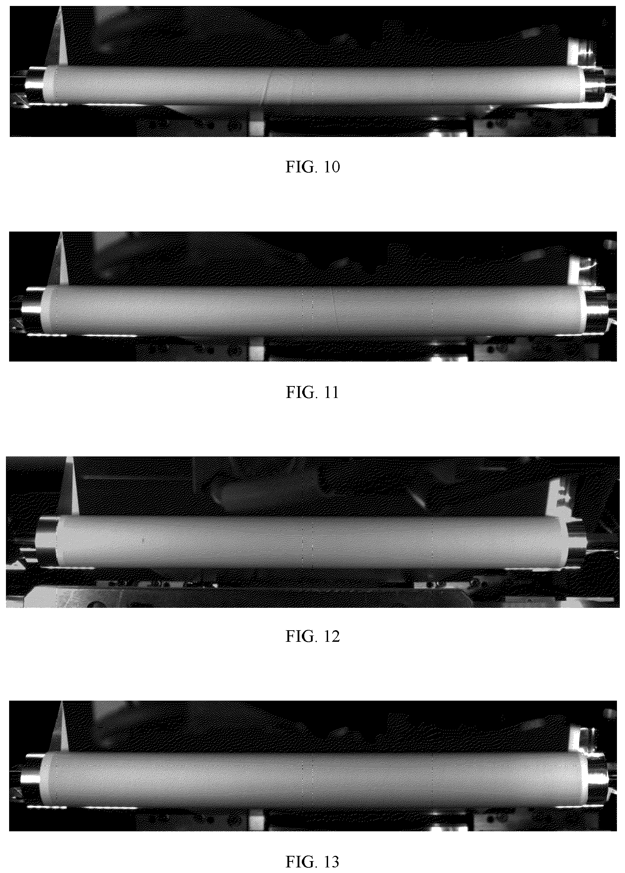

In another embodiment of this application, under a condition that the position of the CCD detection mechanism 900 is not changed, the lower separator 101, the anode plate 202, the upper separator 102, and the cathode plate 201 (that is, positions of the cathode plate 201 and the anode plate 202 are exchanged) are wound in sequence to form the cell 400. A front anode plate 202 of a to-be-inspected cell 400 is shot using the CCD detection mechanism 900 to obtain various types of cell images as shown in FIG. 10 to FIG. 13.

In other embodiments of this application, to expand sources of the cell images, the electrode plate wrinkling detection apparatus may be disposed at a position of a cell winding machine, specifically at a position of an electrode plate tangent to the cell. The corresponding obtained cell images are images of the electrode plate tangent to the to-be-inspected cell. The images of the electrode plate tangent to the to-be-inspected cell are typically images of an anode plate tangent to the to-be-inspected cell. This is because an anode plate and a cathode plate are made of different materials, and the cathode plate is hard and less prone to wrinkling.

In the electrode plate wrinkling detection method provided in some embodiments of this application, the images of the cells with wrinkled electrode plates and the images of the cells with non-wrinkled electrode plates are first acquired, then the acquired images are labeled with types, and a database is constructed using the labeled images. Based on the database, an AI deep learning electrode plate wrinkling detection model is trained using the convolutional neural network. The generated electrode plate wrinkling detection model is capable of checking cell images and categorizing them into corresponding types. In addition, in this method, the images outside the database are further used to test the electrode plate wrinkling detection model, so as to improve the detection accuracy. To detect whether the cells have wrinkled electrode plates in a real-time manner and determine the defective cells, the cell images acquired during the battery winding process are taken as detection targets, which can not only discover the defective cells in a timely manner, but also remind a scheduling personnel to adjust the machine in a timely manner, reducing the electrode plate wrinkling probability in the whole winding process. In addition, this also avoids false negatives and false positives caused by observation on the appearance of the cells and the problem of loss of manpower and material resources caused by disassembly of the normal cells due to disassembly of the cells for determining whether the cells have wrinkled electrode plates.

A second aspect of this application provides an electrode plate wrinkling detection system. The system includes: an electrode plate wrinkling detection apparatus configured to acquire images of cells with wrinkled electrode plates and images of cells with non-wrinkled electrode plates; a processing module configured to: perform type labeling processing on the images of the cells with wrinkled electrode plates and the images of the cells with non-wrinkled electrode plates; and construct a database by using the labeled images; a training module configured to: based on the database, train via a convolutional neural network to generate an electrode plate wrinkling detection model; a testing module configured to test and calibrate the electrode plate wrinkling detection model by using images outside the database; and a detection module configured to perform electrode plate wrinkling detection on cell images obtained in a real-time manner during a battery winding process by using the tested and calibrated electrode plate wrinkling detection model.

In some embodiments, the electrode plate wrinkling detection system further includes: a pre-processing module configured to pre-process the acquired images of the cells with wrinkled electrode plates and images of the cells with non-wrinkled electrode plates, where the pre-processing includes: performing cleansing on the images of the cells with wrinkled electrode plates and the images of the cells with non-wrinkled electrode plates, removing interference parts, and broadening, enhancing, and brightening the images of the cells with wrinkled electrode plates and the images of the cells with non-wrinkled electrode plates.

In some embodiments, the processing module is further configured to: label the images of the cells with wrinkled electrode plates and the images of the cells with non-wrinkled electrode plates with types including wrinkling of electrode plate, wrinkling of separator, stripe pattern on separator, stain on separator, and full qualification; and construct a database by using the images labeled with the types including wrinkling of electrode plate, wrinkling of separator, stripe pattern on separator, stain on separator, and full qualification.

In some embodiments, the testing module is further configured to: test the electrode plate wrinkling detection model by using the images outside the database; under a condition that a test result meets a target requirement, communicatively transmit a signal indicating that the requirement is met to the detection module; or under a condition that the test result does not meet the target requirement, retrain the electrode plate wrinkling detection model by modifying parameters of the convolutional neural network until the test result meets the target requirement, and communicatively transmit the signal indicating that the requirement is met to the detection module; and the detection module is further configured to: in response to the received signal indicating that the requirement is met, perform the electrode plate wrinkling detection.

In some embodiments, the electrode plate wrinkling detection apparatus is further configured to: shoot to-be-inspected cells during a winding process to obtain images of the cells; and transmit the images of the cells to the detection module; and the detection module is further configured to: receive the images of the cells; check the images of the cells by using the electrode plate wrinkling detection model; when determining that defective cells with wrinkled electrode plates exist, output a signal indicating discharging the defective cells into a defective product tank; or when determining that no defective cell with wrinkled electrode plates exists, output a signal indicating discharging normal cells into a next production procedure.

In some embodiments, when determining that the defective cells with wrinkled electrode plates exist, the detection module further gives an electrode plate wrinkling alarm prompt.

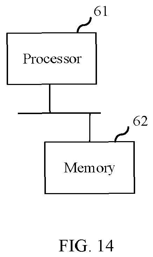

Referring to FIG. 14, a third aspect of this application provides a terminal. The terminal includes: at least one processor 61; and a memory 62 communicatively connected to the at least one processor 61, where the memory 62 stores instructions executable by the at least one processor 61, and the instructions are executed by the at least one processor 61 to implement the electrode plate wrinkling detection method according to any one of the embodiments of this application.

The memory 62 and the processor 61 are connected via a bus. The bus may include any quantity of interconnected buses and bridges, and the bus connects various circuits of one or more processors 61 and memories 62 together. The bus can also connect various other circuits such as a peripheral device, a voltage regulator, and a power management circuit together, which is not further described herein. A bus interface provides an interface between the bus and a transceiver. The transceiver may be a single element or a plurality of elements, such as a plurality of receivers and transmitters, providing units for communicating with various other apparatuses on a transmission medium. Data processed by the processor is transmitted over the wireless medium via an antenna. The antenna can also receive the data and transmit the data to the processor 61.

The processor 61 is responsible for managing the bus and general processing, and can also provide various functions including timing, peripheral interfacing, voltage regulation, power management, and other control functions. The memory 62 may be configured to store data used by processor 61 when performing operations.

A fourth aspect of this application provides a storage medium storing a computer program, where the computer program is executed by a processor to implement the electrode plate wrinkling detection method according to any one of the embodiments of this application.

Persons skilled in the art should understand that all or some of the steps of the method in the foregoing embodiments may be accomplished by hardware associated with program instructions. The program instructions are stored in the storage medium and include a plurality of instructions used to enable a device (which may be a single-chip microcomputer, a chip, or the like) or a processor to perform all or some of the steps of the method in the various embodiments of this application. The foregoing storage medium includes various media capable of storing program code, such as a USB flash drive, a portable hard drive, a read-only memory (ROM), a random access memory (RAM), a magnetic disk, or an optical disc.

This application is not limited to the specific embodiments disclosed in this specification but includes all technical solutions falling within the scope of the claims.

## Claims

1. A computer-implemented electrode plate wrinkling detection method, comprising:
acquiring (S1) images of cells with wrinkled electrode plates and images of cells with non-wrinkled electrode plates;
performing type labeling processing (S2) on the images of the cells with wrinkled electrode plates and the images of the cells with non-wrinkled electrode plates, and constructing a database by using the labeled images;
based on the database, training (S3) via a convolutional neural network to generate an electrode plate wrinkling detection model;
testing (S4) and calibrating the electrode plate wrinkling detection model by using images outside the database; and
performing electrode plate wrinkling detection (S5) on cell images obtained in a real-time manner during a battery winding process by using the tested and calibrated electrode plate wrinkling detection model.

2. The electrode plate wrinkling detection method according to claim 1, wherein after the acquiring (S1) images of cells with wrinkled electrode plates and images of cells with non-wrinkled electrode plates, the electrode plate wrinkling detection method further comprises:
pre-processing (S1') the acquired images of the cells with wrinkled electrode plates and images of the cells with non-wrinkled electrode plates, wherein the pre-processing (S1') comprises: performing cleansing (S11') on the images of the cells with wrinkled electrode plates and the images of the cells with non-wrinkled electrode plates, removing (S12') interference parts, and broadening (S13'), enhancing, and brightening the images of the cells with wrinkled electrode plates and the images of the cells with non-wrinkled electrode plates.

3. The electrode plate wrinkling detection method according to claim 1 or 2, wherein the performing type labeling processing (S2) on the images of the cells with wrinkled electrode plates and the images of the cells with non-wrinkled electrode plates, and constructing a database by using the labeled images comprises:
labeling the images of the cells with wrinkled electrode plates and the images of the cells with non-wrinkled electrode plates with types comprising wrinkling of electrode plate, wrinkling of separator, stripe pattern on separator, stain on separator, and full qualification, and constructing a database by using the images labeled with the types comprising wrinkling of electrode plate, wrinkling of separator, stripe pattern on separator, stain on separator, and full qualification.

4. The electrode plate wrinkling detection method according to any one of claims 1 to 3, wherein the testing (S4) and calibrating the electrode plate wrinkling detection model by using images outside the database comprises:
testing the electrode plate wrinkling detection model by using the images outside the database; under a condition that a test result meets a target requirement, performing electrode plate wrinkling detection on cell images obtained in a real-time manner during a battery winding process by using the tested and calibrated electrode plate wrinkling detection model; or under a condition that the test result does not meet the target requirement, retraining the electrode plate wrinkling detection model by modifying parameters of the convolutional neural network until the test result meets the target requirement.

5. The electrode plate wrinkling detection method according to any one of claims 1 to 4, wherein the performing electrode plate wrinkling detection (S5) on cell images obtained in a real-time manner during a battery winding process by using the tested and calibrated electrode plate wrinkling detection model comprises:
shooting to-be-inspected cells during a winding process to obtain images of the cells; inputting the images of the cells into the electrode plate wrinkling detection model for detection; when determining that defective cells with wrinkled electrode plates exist, discharging the defective cells into a defective product tank; or when determining that no defective cell with wrinkled electrode plates exists, discharging normal cells into a next production procedure.

6. The electrode plate wrinkling detection method according to claim 5, wherein when it is determined that the defective cells with wrinkled electrode plates exist, an electrode plate wrinkling alarm prompt is further given.

7. An electrode plate wrinkling detection system, comprising:
an electrode plate wrinkling detection apparatus configured to acquire images of cells with wrinkled electrode plates and images of cells with non-wrinkled electrode plates;
a processing module configured to: perform type labeling processing on the images of the cells with wrinkled electrode plates and the images of the cells with non-wrinkled electrode plates; and construct a database by using the labeled images;
a training module configured to: based on the database, train via a convolutional neural network to generate an electrode plate wrinkling detection model;
a testing module configured to test and calibrate the electrode plate wrinkling detection model by using images outside the database; and
a detection module configured to perform electrode plate wrinkling detection on cell images obtained in a real-time manner during a battery winding process by using the tested and calibrated electrode plate wrinkling detection model.

8. The electrode plate wrinkling detection system according to claim 7, further comprising:
a pre-processing module configured to pre-process the acquired images of the cells with wrinkled electrode plates and images of the cells with non-wrinkled electrode plates, wherein the pre-processing comprises: performing cleansing on the images of the cells with wrinkled electrode plates and the images of the cells with non-wrinkled electrode plates, removing interference parts, and broadening, enhancing, and brightening the images of the cells with wrinkled electrode plates and the images of the cells with non-wrinkled electrode plates.

9. The electrode plate wrinkling detection system according to claim 7 or 8, wherein the processing module is further configured to:
label the images of the cells with wrinkled electrode plates and the images of the cells with non-wrinkled electrode plates with types comprising wrinkling of electrode plate, wrinkling of separator, stripe pattern on separator, stain on separator, and full qualification; and construct a database by using the images labeled with the types comprising wrinkling of electrode plate, wrinkling of separator, stripe pattern on separator, stain on separator, and full qualification.

10. The electrode plate wrinkling detection system according to any one of claims 7 to 9, wherein:
the testing module is further configured to: test the electrode plate wrinkling detection model by using the images outside the database; under a condition that a test result meets a target requirement, communicatively transmit a signal indicating that the requirement is met to the detection module; or under a condition that the test result does not meet the target requirement, retrain the electrode plate wrinkling detection model by modifying parameters of the convolutional neural network until the test result meets the target requirement, and communicatively transmit the signal indicating that the requirement is met to the detection module; and
the detection module is further configured to: in response to the received signal indicating that the requirement is met, perform the electrode plate wrinkling detection.

11. The electrode plate wrinkling detection system according to any one of claims 7 to 10, wherein:
the electrode plate wrinkling detection apparatus is further configured to: shoot to-be-inspected cells during a winding process to obtain images of the cells; and transmit the images of the cells to the detection module; and
the detection module is further configured to: receive the images of the cells; check the images of the cells by using the electrode plate wrinkling detection model; when determining that defective cells with wrinkled electrode plates exist, output a signal indicating discharging the defective cells into a defective product tank; or when determining that no defective cell with wrinkled electrode plates exists, output a signal indicating discharging normal cells into a next production procedure.

12. The electrode plate wrinkling detection system according to claim 11, wherein the detection module is further configured to provide an electrode plate wrinkling alarm prompt, when determining that the defective cells with wrinkled electrode plates exist.

13. A terminal, comprising:
at least one processor (61); and
a memory (62) communicatively connected to the at least one processor (61), wherein:
the memory (62) stores instructions executable by the at least one processor (61), and the instructions are executed by the at least one processor (61) to implement the electrode plate wrinkling detection method according to any one of claims 1 to 6.

14. A storage medium storing a computer program, wherein the computer program is executed by a processor to implement the electrode plate wrinkling detection method according to any one of claims 1 to 6.

## Patentansprüche

1. Computerimplementiertes Verfahren zur Erkennung von Falten an Elektrodenplatten, das Folgendes beinhaltet:
Erfassen (S1) von Bildern von Zellen mit faltigen Elektrodenplatten und von Bildern von Zellen mit faltenfreien Elektrodenplatten;
Durchführen von Typmarkierungsverarbeitung (S2) an den Bildern der Zellen mit faltigen Elektrodenplatten und den Bildern der Zellen mit faltenfreien Elektrodenplatten sowie Erstellen einer Datenbank anhand der markierten Bilder;
Trainieren (S3), auf der Basis der Datenbank, über ein konvolutionelles neuronales Netzwerk, zum Erzeugen eines Modells zur Erkennung von Falten an Elektrodenplatten;
Testen (S4) und Kalibrieren des Modells zur Erkennung von Falten an Elektrodenplatten anhand von Bildern außerhalb der Datenbank; und
Durchführen einer Erkennung (S5) von Falten an Elektrodenplatten an während eines Batteriewickelvorgangs in Echtzeit erfassten Zellbildern anhand des getesteten und kalibrierten Modells zur Erkennung von Falten an Elektrodenplatten.

2. Verfahren zur Erkennung von Falten an Elektrodenplatten nach Anspruch 1, wobei das Verfahren zur Erkennung von Falten an Elektrodenplatten nach dem Erfassen (S1) von Bildern von Zellen mit faltigen Elektrodenplatten und von Bildern von Zellen mit faltenfreien Elektrodenplatten ferner Folgendes beinhaltet:
Vorverarbeiten (S1') der erfassten Bilder der Zellen mit faltigen Elektrodenplatten und der erfassten Bilder der Zellen mit faltenfreien Elektrodenplatten, wobei das Vorverarbeiten (S1') Folgendes beinhaltet: Durchführen von Bereinigung (S11') an den Bildern der Zellen mit faltigen Elektrodenplatten und den Bildern der Zellen mit faltenfreien Elektrodenplatten, Entfernen (S12') von Interferenzteilen sowie Verbreitern (S13'), Verstärken und Aufhellen der Bilder der Zellen mit faltigen Elektrodenplatten und der Bilder der Zellen mit faltenfreien Elektrodenplatten.

3. Verfahren zur Erkennung von Falten an Elektrodenplatten nach Anspruch 1 oder 2, wobei das Durchführen von Typmarkierungsverarbeitung (S2) an den Bildern der Zellen mit faltigen Elektrodenplatten und den Bildern der Zellen mit faltenfreien Elektrodenplatten sowie das Erstellen einer Datenbank anhand der markierten Bilder Folgendes beinhaltet:
Markieren der Bilder der Zellen mit faltigen Elektrodenplatten und der Bilder der Zellen mit faltenfreien Elektrodenplatten mit Typen, die Elektrodenplattenfalten, Separatorfalten, Streifenmuster auf dem Separator, Flecken auf dem Separator und völlige Eignung umfassen, sowie das Erstellen einer Datenbank anhand der Bilder, die mit den Typen markiert sind, die Elektrodenplattenfalten, Separatorfalten, Streifenmuster auf dem Separator, Flecken auf dem Separator und völlige Eignung umfassen.

4. Verfahren zur Erkennung von Falten an Elektrodenplatten nach einem der Ansprüche 1 bis 3, wobei das Testen (S4) und Kalibrieren des Modells zur Erkennung von Falten an Elektrodenplatten anhand von Bildern außerhalb der Datenbank Folgendes beinhaltet:
Testen des Modells zur Erkennung von Falten an Elektrodenplatten anhand der Bilder außerhalb der Datenbank; Durchführen, unter einer Bedingung, dass ein Testergebnis eine Zielanforderung erfüllt, der Erkennung von Falten an Elektrodenplatten an Zellbildern, die während eines Batteriewickelvorgangs in Echtzeit aufgenommen wurden, anhand des getesteten und kalibrierten Modells zur Erkennung von Falten an Elektrodenplatten; oder Neutrainieren, unter einer Bedingung, dass das Testergebnis die Zielanforderung nicht erfüllt, des Modells zur Erkennung von Falten an Elektrodenplatten durch Modifizieren von Parametern des konvolutionellen neuronalen Netzwerks, bis das Testergebnis die Zielanforderung erfüllt.

5. Verfahren zur Erkennung von Falten an Elektrodenplatten nach einem der Ansprüche 1 bis 4, wobei das Durchführen der Erkennung (S5) von Falten an Elektrodenplatten an während eines Batteriewickelvorgangs in Echtzeit aufgenommenen Zellbildern anhand des getesteten und kalibrierten Modells zur Erkennung von Falten an Elektrodenplatten Folgendes beinhaltet:
Aufnehmen von zu prüfenden Zellen während eines Wickelvorgangs, um Bilder der Zellen zu erhalten; Eingeben der Bilder der Zellen in das Modell zur Erkennung von Falten an Elektrodenplatten zur Erkennung; Abführen, wenn festgestellt wird, dass fehlerhafte Zellen mit faltigen Elektrodenplatten vorhanden sind, der fehlerhaften Zellen in einen Ausschussproduktbehälter; oder Abführen, wenn festgestellt wird, dass keine fehlerhafte Zelle mit faltigen Elektrodenplatten vorhanden ist, der einwandfreien Zellen in einen nächsten Produktionsschritt.

6. Verfahren zur Erkennung von Falten an Elektrodenplatten nach Anspruch 5, wobei, wenn festgestellt wird, dass die fehlerhaften Zellen mit faltigen Elektrodenplatten vorhanden sind, zusätzlich eine Elektrodenplattenfalten-Alarmmeldung gegeben wird.

7. System zur Erkennung von Falten an Elektrodenplatten, das Folgendes umfasst:
eine Vorrichtung zur Erkennung von Falten an Elektrodenplatten, konfiguriert zum Erfassen von Bildern von Zellen mit faltigen Elektrodenplatten und von Bildern von Zellen mit faltenfreien Elektrodenplatten;
ein Verarbeitungsmodul, konfiguriert zum: Durchführen von Typmarkierungsverarbeitung an den Bildern der Zellen mit faltigen Elektrodenplatten und den Bildern der Zellen mit faltenfreien Elektrodenplatten; und Erstellen einer Datenbank anhand der markierten Bilder;
ein Trainingsmodul, konfiguriert zum: Trainieren, auf der Basis der Datenbank, über ein konvolutionelles neuronales Netzwerk, zum Erzeugen eines Modells zur Erkennung von Falten an Elektrodenplatten;
ein Testmodul, konfiguriert zum Testen und Kalibrieren des Modells zur Erkennung von Falten an Elektrodenplatten anhand von Bildern außerhalb der Datenbank; und
ein Erkennungsmodul, konfiguriert zum Durchführen von Erkennung von Falten an Elektrodenplatten an während eines Batteriewickelvorgangs in Echtzeit aufgenommenen Zellbildern anhand des getesteten und kalibrierten Modells zur Erkennung von Falten an Elektrodenplatten.

8. System zur Erkennung von Falten an Elektrodenplatten nach Anspruch 7, das ferner Folgendes umfasst:
ein Vorverarbeitungsmodul, konfiguriert zum Vorverarbeiten der erfassten Bilder der Zellen mit faltigen Elektrodenplatten und der erfassten Bilder der Zellen mit faltenfreien Elektrodenplatten, wobei das Vorverarbeiten Folgendes beinhaltet: Durchführen von Bereinigung an den Bildern der Zellen mit faltigen Elektrodenplatten und den Bildern der Zellen mit faltenfreien Elektrodenplatten, Entfernen von Interferenzteilen sowie Verbreitern, Verstärken und Aufhellen der Bilder der Zellen mit faltigen Elektrodenplatten und der Bilder der Zellen mit faltenfreien Elektrodenplatten.

9. System zur Erkennung von Falten an Elektrodenplatten nach Anspruch 7 oder 8, wobei das Verarbeitungsmodul ferner konfiguriert ist zum:
Markieren der Bilder der Zellen mit faltigen Elektrodenplatten und der Bilder der Zellen mit faltenfreien Elektrodenplatten mit Typen, die Elektrodenplattenfalten, Separatorfalten, Streifenmuster auf dem Separator, Flecken auf dem Separator und völlige Eignung umfassen; und Erstellen einer Datenbank anhand der Bilder, die mit den Typen markiert sind, die Elektrodenplattenfalten, Separatorfalten, Streifenmuster auf dem Separator, Flecken auf dem Separator und völlige Eignung umfassen.

10. System zur Erkennung von Falten an Elektrodenplatten nach einem der Ansprüche 7 bis 9, wobei:
das Testmodul ferner konfiguriert ist zum: Testen des Modells zur Erkennung von Falten an Elektrodenplatten anhand der Bilder außerhalb der Datenbank; kommunikatives Übertragen, unter einer Bedingung, dass ein Testergebnis eine Zielanforderung erfüllt, eines Signals, das anzeigt, dass die Anforderung erfüllt ist, zu dem Erkennungsmodul; oder Neutrainieren, unter einer Bedingung, dass das Testergebnis die Zielanforderung nicht erfüllt, des Modells zur Erkennung von Falten an Elektrodenplatten durch Modifizieren von Parametern des konvolutionellen neuronalen Netzwerks, bis das Testergebnis die Zielanforderung erfüllt, und kommunikatives Übertragen des Signals, das anzeigt, dass die Anforderung erfüllt ist, zu dem Erkennungsmodul; und
das Erkennungsmodul ferner konfiguriert ist zum: Durchführen der Erkennung von Falten an Elektrodenplatten als Reaktion auf das empfangene Signal, das anzeigt, dass die Anforderung erfüllt ist.

11. System zur Erkennung von Falten an Elektrodenplatten nach einem der Ansprüche 7 bis 10, wobei:
die Vorrichtung zur Erkennung von Falten an Elektrodenplatten ferner konfiguriert ist zum: Aufnehmen von zu prüfenden Zellen während eines Wickelvorgangs, um Bilder der Zellen zu erhalten; und Übertragen der Bilder der Zellen zu dem Erkennungsmodul; und
das Erkennungsmodul ferner konfiguriert ist zum: Empfangen der Bilder der Zellen; Prüfen der Bilder der Zellen anhand des Modells zur Erkennung von Falten an Elektrodenplatten; Ausgeben, wenn festgestellt wird, dass fehlerhafte Zellen mit faltigen Elektrodenplatten vorhanden sind, eines Signals, das das Abführen der fehlerhaften Zellen in einen Ausschussproduktbehälter anzeigt; oder Ausgeben, wenn festgestellt wird, dass keine fehlerhafte Zelle mit faltigen Elektrodenplatten vorhanden ist, eines Signals, das das Abführen einwandfreier Zellen in einen nächsten Produktionsschritt anzeigt.

12. System zur Erkennung von Falten an Elektrodenplatten nach Anspruch 11, wobei das Erkennungsmodul ferner zum Geben einer Elektrodenplattenfalten-Alarmmeldung konfiguriert ist, wenn festgestellt wird, dass fehlerhafte Zellen mit faltigen Elektrodenplatten vorhanden sind.

13. Endgerät, das Folgendes umfasst:
mindestens einen Prozessor (61); und
einen Speicher (62), der mit dem mindestens einen Prozessor (61) kommunikativ verbunden ist, wobei:
der Speicher (62) Befehle speichert, die von dem mindestens einen Prozessor (61) ausgeführt werden können, und die Befehle von dem mindestens einen Prozessor (61) zum Implementieren des Verfahrens zur Erkennung von Falten an Elektrodenplatten nach einem der Ansprüche 1 bis 6 ausgeführt werden.

14. Speichermedium, auf dem ein Computerprogramm gespeichert ist, wobei das Computerprogramm von einem Prozessor ausgeführt wird, um das Verfahren zur Erkennung von Falten an Elektrodenplatten nach einem der Ansprüche 1 bis 6 zu implementieren.

## Revendications

1. Procédé mis en œuvre par ordinateur de détection de plissement d'électrode plane, comprenant les étapes consistant à :
acquérir (S1) des images de cellules avec des électrodes planes plissées et des images de cellules avec des électrodes planes non plissées ;
réaliser un traitement d'étiquetage de type (S2) sur les images des cellules avec des électrodes planes plissées et les images des cellules avec des électrodes planes non plissées, et construire une base de données au moyen des images étiquetées ;
sur la base de la base de données, réaliser une formation (S3) par l'intermédiaire d'un réseau neuronal convolutif pour générer un modèle de détection de plissement d'électrode plane ;
tester (S4) et étalonner le modèle de détection de plissement d'électrode plane au moyen d'images externes à la base de données ; et
réaliser une détection de plissement d'électrode plane (S5) sur des images de cellules obtenues en temps réel pendant un processus d'enroulement de batterie au moyen du modèle de détection de plissement d'électrode plane testé et étalonné.

2. Procédé de détection de plissement d'électrode plane selon la revendication 1, le procédé de détection de plissement d'électrode plane comprenant en outre, après l'acquisition (S1) d'images de cellules avec des électrodes planes plissées et d'images de cellules avec des électrodes planes non plissées, l'étape consistant à :
prétraiter (S1') les images acquises des cellules avec des électrodes planes plissées et les images des cellules avec des électrodes planes non plissées, le prétraitement (S1') comprenant les étapes consistant à : réaliser un nettoyage (S11') sur les images des cellules avec des électrodes planes plissées et les images des cellules avec des électrodes planes non plissées, supprimer (S12') des parties d'interférence, et élargir (S13'), améliorer et éclaircir les images des cellules avec des électrodes planes plissées et les images des cellules avec des électrodes planes non plissées.

3. Procédé de détection de plissement d'électrode plane selon la revendication 1 ou 2, la réalisation d'un traitement d'étiquetage de type (S2) sur les images des cellules avec des électrodes planes plissées et les images des cellules avec des électrodes planes non plissées et la construction d'une base de données au moyen des images étiquetées comprenant les étapes consistant à :
étiqueter les images des cellules avec des électrodes planes plissées et les images des cellules avec des électrodes planes non plissées avec des types comprenant un plissement d'électrode plane, un plissement de séparateur, un motif de rayures sur séparateur, une tache sur séparateur et une qualification complète, et construire une base de données au moyen des images étiquetées avec les types comprenant un plissement d'électrode plane, un plissement de séparateur, un motif de rayures sur séparateur, une tache sur séparateur et une qualification complète.

4. Procédé de détection de plissement d'électrode plane selon l'une quelconque des revendications 1 à 3, le test (S4) et l'étalonnage du modèle de détection de plissement d'électrode plane au moyen d'images externes à la base de données comprenant les étapes consistant à :
tester le modèle de détection de plissement d'électrode plane au moyen des images externes à la base de données ; à condition qu'un résultat de test satisfasse à une exigence cible, réaliser une détection de plissement d'électrode plane sur des images de cellules obtenues en temps réel pendant un processus d'enroulement de batterie au moyen du modèle de détection de plissement d'électrode plane testé et étalonné ; ou à condition que le résultat de test ne satisfasse pas à l'exigence cible, former à nouveau le modèle de détection de plissement d'électrode plane en modifiant des paramètres du réseau neuronal convolutif jusqu'à ce que le résultat de test satisfasse à l'exigence cible.

5. Procédé de détection de plissement d'électrode plane selon l'une quelconque des revendications 1 à 4, la réalisation d'une détection de plissement d'électrode plane (S5) sur des images de cellules obtenues en temps réel pendant un processus d'enroulement de batterie au moyen du modèle de détection de plissement d'électrode plane testé et étalonné comprenant les étapes consistant à :
prendre des photos de cellules à inspecter pendant un processus d'enroulement pour obtenir des images des cellules ; entrer les images des cellules dans le modèle de détection de plissement d'électrode plane en vue d'une détection ; lorsqu'il est déterminé qu'il existe des cellules défectueuses avec des électrodes planes plissées, décharger les cellules défectueuses dans un bac de produits défectueux ; ou lorsqu'il est déterminé qu'il n'existe aucune cellule défectueuse avec des électrodes planes plissées, décharger les cellules normales vers une procédure de production suivante.

6. Procédé de détection de plissement d'électrode plane selon la revendication 5, lorsqu'il est déterminé qu'il existe des cellules défectueuses avec des électrodes planes plissées, une invite d'alarme de plissement d'électrode plane étant en outre émise.

7. Système de détection de plissement d'électrode plane, comprenant :
un appareil de détection de plissement d'électrode plane, configuré pour acquérir des images de cellules avec des électrodes planes plissées et des images de cellules avec des électrodes planes non plissées ;
un module de traitement, configuré pour : réaliser un traitement d'étiquetage de type sur les images des cellules avec des électrodes planes plissées et les images des cellules avec des électrodes planes non plissées ; et construire une base de données au moyen des images étiquetées ;
un module de formation, configuré pour : sur la base de la base de données, réaliser une formation par l'intermédiaire d'un réseau neuronal convolutif pour générer un modèle de détection de plissement d'électrode plane ;
un module de test, configuré pour tester et étalonner le modèle de détection de plissement d'électrode plane au moyen d'images externes à la base de données ; et
un module de détection, configuré pour réaliser une détection de plissement d'électrode plane sur des images de cellules obtenues en temps réel pendant un processus d'enroulement de batterie au moyen du modèle de détection de plissement d'électrode plane testé et étalonné.

8. Système de détection de plissement d'électrode plane selon la revendication 7, comprenant en outre :
un module de prétraitement, configuré pour prétraiter les images acquises des cellules avec des électrodes planes plissées et les images des cellules avec des électrodes planes non plissées, le prétraitement comprenant les opérations consistant à : réaliser un nettoyage sur les images des cellules avec des électrodes planes plissées et les images des cellules avec des électrodes planes non plissées, supprimer des parties d'interférence, et élargir, améliorer et éclaircir les images des cellules avec des électrodes planes plissées et les images des cellules avec des électrodes planes non plissées.

9. Système de détection de plissement d'électrode plane selon la revendication 7 ou 8, le module de traitement étant en outre configuré pour :
étiqueter les images des cellules avec des électrodes planes plissées et les images des cellules avec des électrodes planes non plissées avec des types comprenant un plissement d'électrode plane, un plissement de séparateur, un motif de rayures sur séparateur, une tache sur séparateur et une qualification complète ; et construire une base de données au moyen des images étiquetées avec les types comprenant un plissement d'électrode plane, un plissement de séparateur, un motif de rayures sur séparateur, une tache sur séparateur et une qualification complète.

10. Système de détection de plissement d'électrode plane selon l'une quelconque des revendications 7 à 9,
le module de test étant en outre configuré pour : tester le modèle de détection de plissement d'électrode plane au moyen des images externes à la base de données ; à condition qu'un résultat de test satisfasse à une exigence cible, émettre en communication vers le module de détection un signal indiquant que l'exigence est satisfaite ; ou à condition que le résultat de test ne satisfasse pas à l'exigence cible, former à nouveau le modèle de détection de plissement d'électrode plane en modifiant des paramètres du réseau neuronal convolutif jusqu'à ce que le résultat de test satisfasse à l'exigence cible, et émettre en communication vers le module de détection le signal indiquant que l'exigence est satisfaite ; et
le module de détection étant en outre configuré pour : en réponse au signal reçu indiquant que l'exigence est satisfaite, réaliser la détection de plissement d'électrode plane.

11. Système de détection de plissement d'électrode plane selon l'une quelconque des revendications 7 à 10,
l'appareil de détection de plissement d'électrode plane étant en outre configuré pour : prendre des photos de cellules à inspecter pendant un processus d'enroulement pour obtenir des images des cellules ; et émettre les images des cellules vers le module de détection ; et
le module de détection étant en outre configuré pour : recevoir les images des cellules ; vérifier les images des cellules au moyen du modèle de détection de plissement d'électrode plane ; lorsqu'il est déterminé qu'il existe des cellules défectueuses avec des électrodes planes plissées, délivrer en sortie un signal indiquant de décharger les cellules défectueuses dans un bac de produits défectueux ; ou lorsqu'il est déterminé qu'il n'existe aucune cellule défectueuse avec des électrodes planes plissées, délivrer en sortie un signal indiquant de décharger les cellules normales vers une procédure de production suivante.

12. Système de détection de plissement d'électrode plane selon la revendication 11, le module de détection étant en outre configuré pour fournir une invite d'alarme de plissement d'électrode plane lorsqu'il est déterminé qu'il existe des cellules défectueuses avec des électrodes planes plissées.

13. Terminal, comprenant :
au moins un processeur (61) ; et
une mémoire (62) connectée en communication à l'au moins un processeur (61),
la mémoire (62) stockant des instructions exécutables par l'au moins un processeur (61), et les instructions étant exécutées par l'au moins un processeur (61) pour mettre en œuvre le procédé de détection de plissement d'électrode plane selon l'une quelconque des revendications 1 à 6.

14. Support de stockage stockant un programme informatique, le programme informatique étant exécuté par un processeur pour mettre en œuvre le procédé de détection de plissement d'électrode plane selon l'une quelconque des revendications 1 à 6.
